# FASCICULE DE BREVET EUROPEEN

(11) **EP 1 723 823 B1**
(45) Date de publication et mention de la délivrance du brevet: **11.06.2008**
(21) Numéro de dépôt: 05736986.0
(22) Date de dépôt: 07.03.2005
(51) Int. Cl.: H04Q 9/00

(54) **SYSTEME DE TELERELEVE D'EQUIPEMENTS DE COMPTAGE**
FERN-ZÄHLERABLESSYSTEM
REMOTE METER READING SYSTEM

(30) Priorité: 08.03.2004 FR 0450467
(43) Date de publication de la demande: 22.11.2006
(73) Titulaire: Manufacture D'Appareillage Electrique de Cahors - MAEC, 46000 Cahors (FR)
(72) Inventeur: IZARD, Pierre, F-46090 Pradines (FR); GODET, Arnaud, F-46140 Douelle (FR)
(74) Mandataire: Bredema
(86) Numéro de dépôt international: PCT/FR2005/000537
(87) Numéro de publication internationale: WO 2005/088321

(56) Documents cités:
- EP-A- 0 718 954
- EP-A- 1 248 489
- US-A- 6 073 169
- US-B1- 6 509 841

## Description

La présente invention concerne un système de télérelève d'équipements de comptage tels que des compteurs, des collecteurs d'index, des interfaces radio...

On connaît déjà de tels systèmes dans lesquels une pluralité d'équipements de comptage, par exemple des compteurs d'électricité, des collecteurs d'index de gaz et/ou d'eau, des interfaces radio sont reliés par un bus de téléreport à un point distant où peut s'effectuer le relevé des équipements, y compris en l'absence des occupants des locaux dans lesquels sont installés ces équipements. Un tel bus de téléreport est typiquement un bus de type EURIDIS décrit dans la norme CEI 62056-31. La relève au point distant peut être effectuée par exemple par l'intermédiaire d'un réseau téléphonique (réseau commuté ou réseau GSM) ou de tout autre type de réseau (LAN, ETHERNET...), ou encore à l'aide d'un terminal de saisie portable.

Les bus de téléreport ont toutefois une portée relativement limitée. Il n'est ainsi pas possible de procéder à la télérelève d'un grand nombre de compteurs distants les uns des autres.

La présente invention vise à palier cet inconvénient.

A cet effet, l'invention a pour objet un système de télérelève d'équipements de comptage, ce système comprenant :
- au moins un bus de téléreport auquel est raccordé au moins un équipement à relever, pour transmettre par ledit bus des informations relatives audit équipement ;
- une interface d'entrée entre ledit bus de téléreport et une ligne d'énergie électrique, ladite interface comprenant un premier circuit de couplage pour transmettre par courant porteur lesdites informations sur ladite ligne d'énergie électrique ;
- un concentrateur comprenant un deuxième circuit de couplage pour sa connexion à ladite ligne d'énergie électrique et au moins une interface de sortie pour la récupération desdites informations;
- ledit concentrateur étant agencé pour recevoir et mémoriser lesdites informations sous la forme d'équipements et d'interfaces d'entrée simulés correspondant aux équipements et aux interfaces réels du système, un bus de téléreport simulé reliant lesdits équipements et interfaces d'entrée simulés à ladite interface de sortie.

Les informations transitent par conséquent des équipements vers l'interface d'entrée par le bus de téléreport, puis vers le concentrateur par le réseau électrique au moyen de communications par courants porteurs. Enfin, les informations sont acheminées vers l'agence de traitement au travers de l'interface de sortie.

Cette interface de sortie peut être elle-même une interface de bus de téléreport, ce qui permet d'effectuer la télérelève à l'aide d'un terminal de saisie portable du type actuellement connu et utilisé.

L'interface de sortie peut également être une interface de réseau téléphonique, par exemple le réseau commuté ou un réseau GSM ou une interface de réseau local Ethernet.

Typiquement, le concentrateur peut être installé au niveau du transformateur moyenne tension / basse tension et permet d'assurer ainsi la télérelève des index de consommation de l'ensemble des clients alimentés par ce transformateur.

Le système peut notamment utiliser pour la transmission des informations par courants porteurs sur la ligne d'énergie électrique le protocole de communication PLAN défini par les normes EN61334. Ce protocole permet un fonctionnement optimal sur l'ensemble des réseaux de distribution basse tension quelles que soient leur longueur et leur densité.

Dans un mode de réalisation particulier, l'interface d'entrée comporte une fonction interne de comptage, par exemple de l'énergie électrique, et peut être dénommée compteur interface. Ladite interface d'entrée est agencée pour transmettre aussi par courants porteurs les informations relatives à ladite fonction interne de comptage.

Egalement dans un mode de réalisation particulier, l'interface d'entrée comporte une fonction interne de comptage, par exemple de l'énergie électrique, mais ne comporte pas de sortie bus de téléreport, et peut-être dénommée compteur courant porteur. Ladite interface d'entrée est agencée pour transmettre aussi par courants porteurs les informations relatives à ladite fonction interne de comptage.

Bien entendu, ces modes de réalisation particuliers ne sont pas exclusifs et le système de relève peut comporter une combinaison des interfaces d'entrées décrites dans chaque mode de réalisation.

Dans un mode de réalisation particulier de l'invention, le concentrateur est agencé pour, lors de son installation, détecter les interfaces d'entrée présentes sur la ligne d'énergie électrique et les équipements raccordés au bus de téléreport de ces interfaces, et pour créer les équipements et interfaces simulés correspondants.

Egalement dans un mode de réalisation particulier, ladite interface d'entrée et ledit concentrateur comprennent des interrupteurs de configuration aptes à associer matériellement l'interface d'entrée à un concentrateur prédéterminé.

Un tel agencement permet d'apporter une solution au problème de couplage parasite entre réseaux voisins et d'éviter des attributions intempestives d'interfaces d'entrée à des concentrateurs non désirés.

Egalement dans un mode de réalisation particulier de l'invention, au moins l'un desdits premier et deuxième circuits de couplage comprend un circuit secondaire de transformateur de couplage connecté en parallèle sur une ligne d'énergie électrique et un amplificateur d'émission, un condensateur étant connecté en série avec l'amplificateur d'émission et le circuit primaire du transformateur.

Bien entendu, un tel circuit de couplage peut être utilisé dans tout autre système de transmission par courants porteurs.

Un tel agencement permet d'optimiser le couplage au niveau de la ligne d'énergie électrique. Cette optimisation consiste d'une part à avoir le maximum de signal sur les charges faibles (les impédances peuvent être inférieures à 2 ohms) et d'autre part de diminuer le courant de sortie généré par l'amplificateur d'émission et par là même le courant consommé au niveau de l'alimentation du primaire du transformateur.

Une résistance peut en outre avoir une de ses bornes connectée entre la sortie de l'amplificateur d'émission et le condensateur et son autre borne à la masse, le circuit de réception du circuit de couplage ayant son entrée au point commun à la sortie de l'amplificateur d'émission, au condensateur et à ladite résistance.

Le transformateur de couplage possède un rapport de transformation primaire/secondaire supérieur ou égal à trois, notamment de l'ordre de quatre.

Dans le cas d'une ligne d'énergie électrique triphasée, le circuit secondaire du transformateur de couplage peut comporter trois sorties, chacune de ces sorties étant connectée en parallèle sur une des phases de la ligne d'énergie par rapport au point commun relié au neutre.

En variante, le circuit de couplage peut comporter trois transformateurs de couplage, le circuit secondaire de chaque transformateur de couplage étant connecté en parallèle sur une phase de la ligne d'énergie par rapport au point commun relié au neutre.

Dans ce dernier cas, le circuit de couplage peut comprendre un condensateur en série avec l'amplificateur d'émission et le circuit primaire de chacun des transformateurs de couplage.

On décrira maintenant à titre d'exemples non limitatifs un mode de réalisation de l'invention en références aux dessins schématiques annexés dans lesquels :
- la figure 1 est une représentation d'ensemble d'un système selon l'invention ;
- la figure 2 est un schéma par blocs d'une interface d'entrée de ce système ;
- la figure 3 est un schéma par blocs d'un concentrateur de ce système;
- la figure 4 est un schéma électrique du circuit de couplage de l'interface de la figure 2 ;
- la figure 5 est un schéma électrique du circuit de couplage du concentrateur de la figure 3 ;
- la figure 6 illustre le fonctionnement du concentrateur de la figure 3 ; et
- la figure 7 est une variante du circuit de couplage de la figure 5.

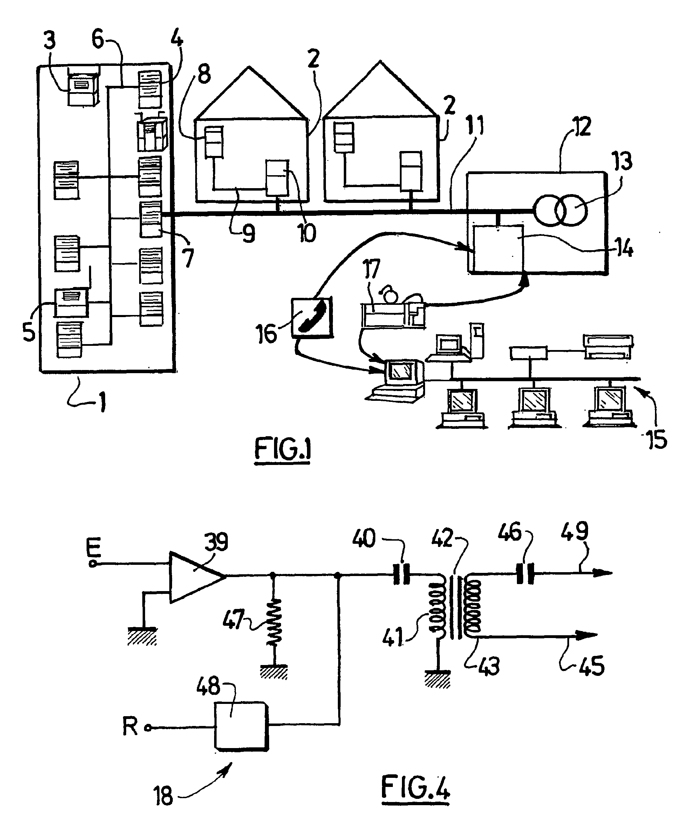

On voit schématisé à la figure 1 un immeuble d'habitation 1 et deux maisons individuelles 2.

Dans l'immeuble 1 sont installés un certain nombre de compteurs à gaz et de transpondeurs 3, de compteurs d'électricité 4, d'interfaces radio 5 ou encore de compteurs d'eau. Les compteurs d'électricité et les interfaces radio sont reliés par un bus EURIDIS 6, ce bus 6 étant lui-même connecté à une interface 7. De même, chaque maison individuelle est équipée d'un compteur électrique 8 relié par un bus EURIDIS 9 à une interface 10.

Les interfaces 7 et 10 assurent l'interface entre les bus 6 et 9 et le réseau électrique basse tension 11 de la manière qui sera décrite ci-après. Le circuit basse tension 11 est alimenté à partir d'un poste de transformation moyenne tension / basse tension 12 contenant le transformateur moyenne tension / basse tension 13 et un concentrateur 14 formant interface entre le réseau basse tension 11 et des moyens de transmission des informations circulant sur le réseau 1 vers une agence de traitement 15.

Ces moyens de transmission comprennent en premier lieu un réseau téléphonique 16, par exemple le réseau commuté ou un réseau GSM, et dans le cas présent un terminal de saisie portable 17 de type connu. L'un ou l'autre de ces moyens peut être utilisé, l'un d'entre eux ayant une priorité.

Les informations provenant des compteurs et des interfaces radio ainsi que les instructions de programmation ou de paramétrage qui leur sont destinés circulent sur les bus EURIDIS 6, 9 selon le protocole propre à ce type de bus. Les interfaces 7, 10 assurent la transmission de ces informations et instructions vers et depuis le réseau basse tension 11 où elles sont transmises conformément au protocole PLAN défini par les normes EN61334.

Au niveau du poste 12, le concentrateur 14 assure la transmission de ces informations et instructions vers et depuis le réseau téléphonique 16 suivant un protocole propre à ce réseau, par exemple le protocole PRACDIS, ou vers le terminal de saisie portable 17 suivant le protocole EURIDIS.

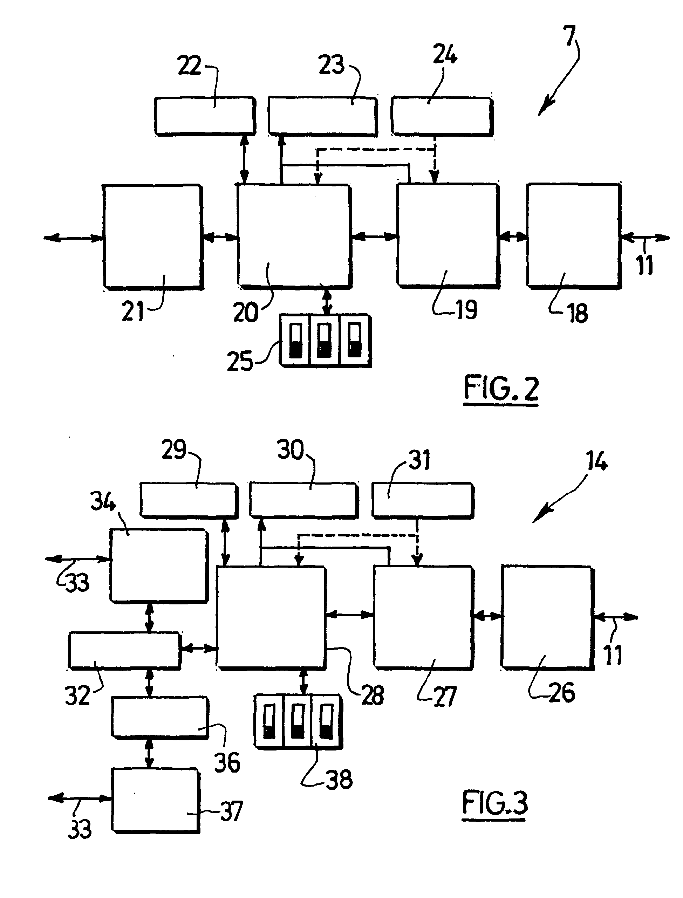

Si l'on se réfère maintenant à la figure 2, on voit une interface d'entrée bus / ligne d'énergie tel que 7.

L'interface 7 comprend un circuit de couplage 18 avec le réseau basse tension. Le circuit de couplage comporte, comme on le verra ci-après, un circuit d'émission (filtrage et amplification) un circuit de réception (filtrage) ainsi que le circuit de couplage secteur proprement dit.

L'interface 7 comporte par ailleurs un modem 19 qui gère notamment les couches basses du protocole courants porteurs, un microcontrôleur 20 qui intègre de manière logicielle les couches hautes du protocole courants porteurs ainsi que le protocole EURIDIS station primaire 21. Un circuit de sauvegarde permanente 22 est commandé par le microcontrôleur et un ensemble de visualisation 23 est également activé par le microcontrôleur et le circuit modem 19. L'interface comprend en outre un circuit d'alimentation 24.

Enfin, des interrupteurs de configuration 25 permettent d'affecter l'interface 7 à un concentrateur 14 particulier afin d'éviter les couplages parasites entre réseaux voisins.

On décrira maintenant un concentrateur 14 en référence à la figure 3.

Le concentrateur 14 comprend d'abord un circuit de couplage triphasé 26 assurant le couplage avec les trois phases basse tension du réseau 11. Ce circuit de couplage sera décrit ci-après.

Le concentrateur 14 comprend par ailleurs un modem 27 qui gère notamment les couches basses du protocole courants porteurs et un microcontrôleur 28 qui intègre de manière logicielle les couches hautes du protocole courants porteurs, le protocole EURIDIS station secondaire, ainsi que le protocole de communication avec le réseau téléphonique. Un circuit de sauvegarde permanente 29 est commandé par le microcontrôleur 28 qui active par ailleurs un ensemble de visualisation 30 en coopération avec le modem 27.

Un circuit d'alimentation 31, par exemple identique au circuit 24 de l'interface d'entrée 7 assure l'alimentation du concentrateur 14. Un circuit de commutation 32 permet de relier la sortie série du microcontrôleur 28 soit à un bus EURIDIS 33 par l'intermédiaire du circuit d'émission / réception station secondaire EURIDIS 34, soit au réseau téléphonique par exemple au réseau commuté 35 par l'intermédiaire d'un modem 36 et d'un circuit de couplage 37.

Enfin des interrupteurs de configuration 38 permettent d'affecter de façon prédéterminée un certain nombre d'interfaces telles que 7 et 10 au concentrateur 14.

Si l'on se réfère maintenant à la figure 4, on voit le circuit de couplage 18 de l'interface 7.

Le circuit de couplage 18 comprend un amplificateur opérationnel d'émission 39 recevant le signal d'émission E. La sortie de l'amplificateur 39 est mise en série avec un condensateur 40 et le circuit primaire 41 du transformateur de couplage 42.

Le circuit secondaire 43 du transformateur est connecté en parallèle sur le réseau basse tension entre une phase 44 et le neutre 45. Une capacité 46 en série avec le circuit secondaire 43 du transformateur 42 assure le filtrage de la composante 50 Hz du réseau.

Par ailleurs, une résistance 47 est connectée entre la sortie de l'amplificateur 39 et la masse, et un circuit de réception et de filtrage 48 a son entrée connectée au point commun entre l'amplificateur 39, le condensateur 40 et la résistance 47 et sa sortie fournit le signal de réception R au modem 19.

On observera qu'il n'y a aucune résistance en série entre l'amplificateur opérationnel 39 et le réseau basse tension, à l'exception de la résistance parasite du transformateur 42.

On règle par la valeur de la capacité du condensateur 40 la résonance du filtre série constitué par ce condensateur en série avec l'inductance de fuite du transformateur et la capacité du condensateur de filtrage 46.

Le transformateur 42 possède ici un rapport de transformation primaire/secondaire de l'ordre de quatre. Il comporte par ailleurs une résistance parasite qui, ramenée au primaire, permet à l'amplificateur 39 de pouvoir générer de manière simple le courant sur le condensateur 40 en cas de court-circuit complet de la sortie. Ce condensateur 40 permet de couper la composante continue du courant de polarisation de l'amplificateur opérationnel 39 et d'éviter la saturation du transformateur.

On peut en outre installer un réseau RC en parallèle sur le circuit primaire 41 du transformateur 42. On peut également installer un filtre RC de sortie en parallèle du circuit secondaire 43 du transformateur 42 pour filtrer les harmoniques et le bruit généré dans les bandes de fréquence où cela est imposé, notamment par les normes.

L'amplificateur opérationnel d'émission 39 est un amplificateur à contre-réaction en courant qui permet de générer le signal de sortie au primaire avec un niveau d'harmoniques peu important même sur les impédances de sortie faible. L'amplificateur 39 est muni d'une entrée qui commande sa mise hors service lorsqu'on est en attente de réception.

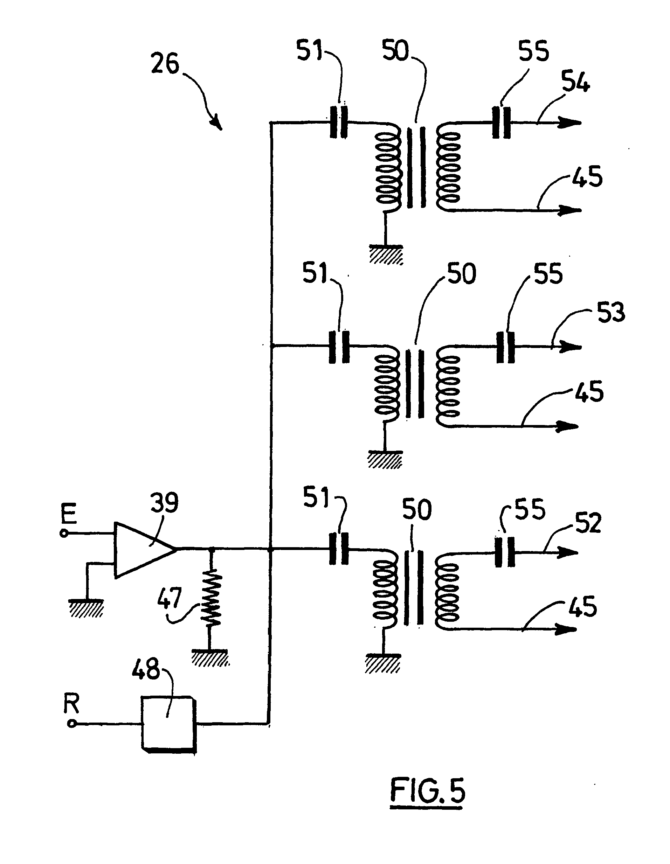

On décrira maintenant en référence à la figure 5, le circuit de couplage triphasé 26 du concentrateur 14.

Ce circuit 26 est similaire au circuit de couplage monophasé 18 de la figure 4, si ce n'est qu'il possède trois transformateurs de couplage 50 reliés entre eux au niveau des condensateurs de découplage continu du primaire 51, homologues du condensateur 40 de la figure 4.

Les secondaires de chaque transformateur sont connectés d'un côté sur chaque phase 52, 53, 54 par l'intermédiaire de capacités 55 de découplage de la composante 50Hz du réseau, homologues de la capacité 46. De l'autre côté, les secondaires de chaque transformateur sont reliés en point commun et connectés au neutre 45.

En revanche, le circuit triphasé 26 comporte un seul circuit d'émission et un seul circuit de réception identiques aux circuits d'émission et de réception de la figure 4 et qui ne seront donc pas décrits ci-après.

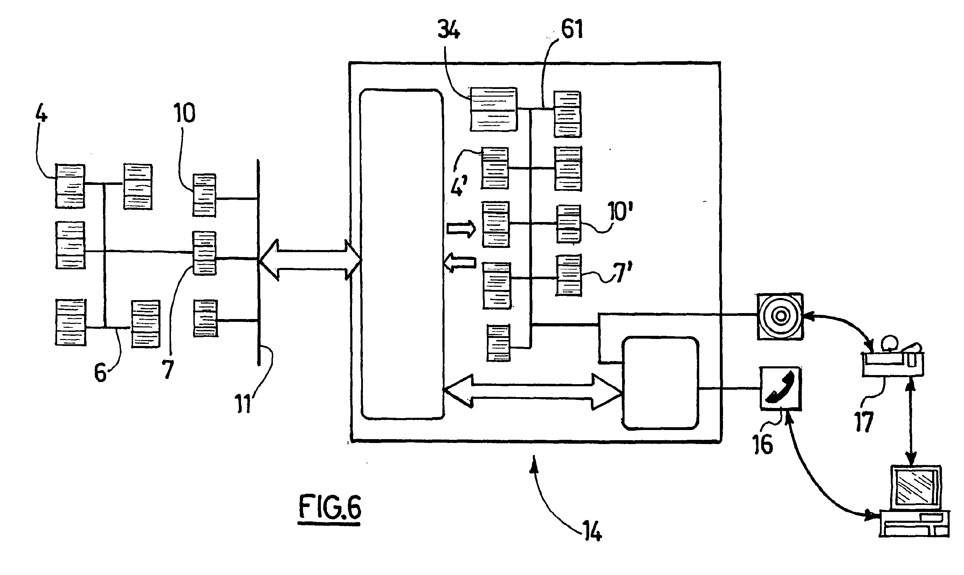

La figure 6 illustre le fonctionnement du concentrateur 14.

Lorsqu'un concentrateur est installé et connecté au réseau basse tension 11, il déclenche une procédure de découverte initiale pour recenser l'ensemble des interfaces telles que 7 et 10 présentes sur le réseau. Au fur et à mesure, il enregistre ces interfaces et leur attribue une adresse.

La procédure d'enregistrement s'accompagne de la création de stations EURIDIS simulées conformément au protocole. Une telle station est créée pour chaque interface telle que 7, 10, et pour chaque compteur tel que 4 détecté sur le bus local 6 au niveau de chaque interface. Les données des compteurs sont recopiées.

Par ailleurs, un bus EURIDIS simulé 61 est créé auquel sont reliés les interfaces simulées telles que 7', 10' les compteurs simulés tels que 4' et la station EURIDIS réelle 34 du concentrateur 14.

Les stations simulées ont un comportement similaire à celui de stations réelles.

Comme on l'a vu précédemment l'accès au bus local du concentrateur est réalisé soit par un terminal de saisie portable 17 soit par le réseau téléphonique commuté 16. On observera que par le terminal 17, il n'est possible de relever et de programmer que des stations simulées. En revanche, le protocole PRACDIS autorise la relève des compteurs réels par l'intermédiaire de l'application PLAN du concentrateur. Enfin, la programmation des compteurs par le réseau téléphonique est adressé exclusivement aux stations réelles.

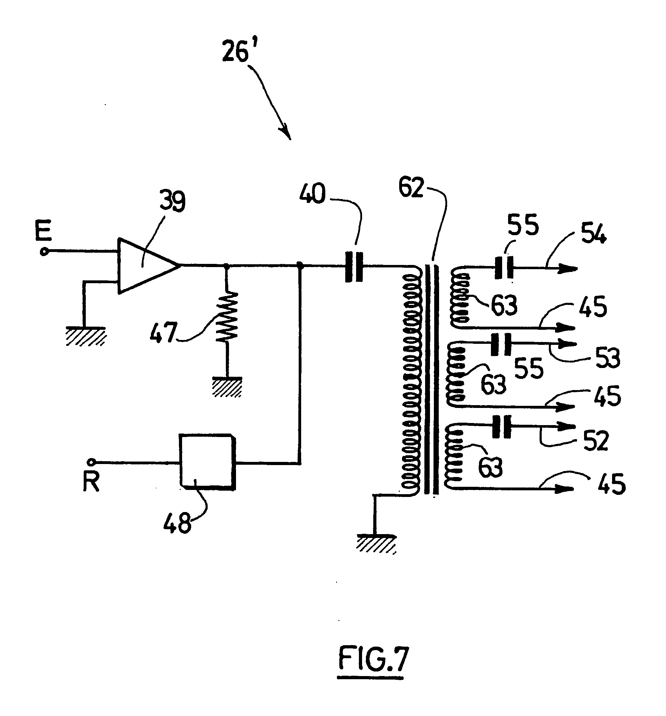

On a enfin représenté à la figure 7 une variante 26' du circuit de couplage triphasé du concentrateur 14.

On utilise ici un seul transformateur 62 à trois bobinages secondaires 63. Même si l'indépendance des signaux générés sur chaque phase n'est pas aussi bonne que dans le cas de la figure 5, ce mode de réalisation est moins onéreux et moins encombrant.

## Revendications

1. Système de télérelève d'équipements de comptage, ce système comprenant:
- au moins un bus de téléreport (6) auquel est raccordé au moins un équipement (4, 5) à relever, pour transmettre par ledit bus des informations relatives audit équipement ;
- une interface d'entrée (7) entre ledit bus de téléreport et une ligne d'énergie électrique (11), ladite interface comprenant un premier circuit de couplage (18) pour transmettre par courants porteurs lesdites informations sur ladite ligne d'énergie électrique ;
- un concentrateur (14) comprenant un deuxième circuit de couplage (26 ; 26') pour sa connexion à ladite ligne d'énergie électrique et au moins une interface de sortie (34, 37) pour la récupération desdites informations ;
- ledit concentrateur étant agencé pour recevoir et mémoriser lesdites informations sous la forme d'équipements (4') et d'interfaces d'entrée simulés (7', 10') correspondant aux équipements et aux interfaces réels du système, un bus de téléreport (61) simulé reliant lesdits équipements et interfaces d'entrée simulés à ladite interface de sortie.

2. Système selon la revendication 1, dans lequel ladite interface de sortie est une interface de bus de téléreport.

3. Système selon la revendication 1, dans lequel ladite interface de sortie est une interface de réseau téléphonique.

4. Système selon la revendication 1, dans lequel ladite interface de sortie est une interface de réseau LAN Ethernet.

5. Système selon l'une quelconque des revendications 1 à 4, dans lequel le concentrateur est agencé pour, lors de son installation, détecter les interfaces d'entrée présents sur ladite ligne d'énergie électrique et les équipements raccordés aux bus de téléreport de ces interfaces, et pour créer les équipements et interfaces simulés correspondants.

6. Système selon l'une quelconque des revendications 1 à 5, dans lequel ladite interface d'entrée et ledit concentrateur comprennent des interrupteurs de configuration (25, 38) aptes à associer matériellement l'interface d'entrée à un concentrateur prédéterminé.

7. Système selon l'une quelconque des revendications 1 à 6, dans lequel ladite interface d'entrée comporte une fonction interne de comptage, par exemple de l'énergie électrique, et est agencée pour transmettre aussi par courants porteurs les informations relatives à ladite fonction interne de comptage.

8. Système l'une quelconque des revendications 1 à 6, dans lequel ladite interface d'entrée comporte une fonction interne de comptage, par exemple de l'énergie électrique, ne comporte pas de sortie bus de téléreport, et est agencée pour transmettre aussi par courants porteurs les informations relatives à la dite fonction interne de comptage.

9. Système selon l'une quelconque des revendications 1 à 8, dans lequel au moins l'un desdits premier et deuxième circuits de couplage comprend un amplificateur d'émission (39) et un circuit secondaire (43) de transformateur de couplage (42, 50) connecté en parallèle sur une ligne d'énergie électrique, et un condensateur (40, 51) en série avec l'amplificateur d'émission et le circuit primaire du transformateur.

10. Système selon la revendication 9, dans lequel une résistance (47) a une de ses bornes connectée entre la sortie de l'amplificateur d'émission et le condensateur et son autre borne à la masse, le circuit de réception (48) du circuit de couplage ayant son entrée au point commun à la sortie de l'amplificateur d'émission, au condensateur et à ladite résistance.

11. Système selon l'une quelconque des revendications 9 et 10, dans lequel ledit transformateur de couplage (42, 50) possède un rapport de transformation primaire/secondaire supérieur ou égal à trois, notamment de l'ordre de quatre.

12. Système selon l'une quelconque des revendications 9 à 11, dans lequel ledit circuit secondaire (63) du transformateur de couplage (62) comporte trois sorties, chacune de ces sorties étant connectée en parallèle sur une phase (52, 53, 54) d'une ligne d'énergie électrique triphasée par rapport au point commun connecté au neutre (45).

13. Système selon l'une quelconque des revendications 9 à 11, dans lequel ledit circuit de couplage comporte trois transformateurs de couplage (50), le circuit secondaire de chaque transformateur de couplage étant connecté en parallèle sur une phase (52, 53, 54) d'une ligne d'énergie électrique triphasée par rapport au point commun connecté au neutre (45).

14. Système selon la revendication 13, dans lequel ledit circuit de couplage comprend un condensateur (51) en série avec l'amplificateur d'émission et le circuit primaire de chacun des transformateurs de couplage.

## Claims

1. A metering equipment remote reading system, such system including:
- at least one remote reporting bus (6) to which is connected at least one equipment (4, 5) to be read, for transmitting information relating to such equipment through said bus;
- an input interface (7) between said remote reporting bus and a power line (11), said interface including a first coupling circuit (18) for transmitting said information on said power line, through carrier currents;
- a concentrator (14) including a second coupling circuit (26; 26') for the connection thereof to said power line and at least one output interface (34, 37) for retrieving such information;
said concentrator being so arranged as to receive and store said information in the form of simulated equipment (4') and input interfaces (7', 10') corresponding to the actual equipment and input interfaces of the system, a simulated remote reporting bus connecting such simulated equipment and input interfaces to said output interface.

2. A system according to claim 1, wherein said output interface is a remote reporting bus interface.

3. A system according to claim 1, wherein said output interface is a telephone network interface.

4. A system according to claim 1, wherein said output interface is an Ethernet LAN network interface.

5. A system according to any one of claims 1 to 4, wherein the concentrator is so arranged as to detect, upon the assembling thereof, the input interfaces existing on said power line, and the equipment connected to the remote reporting buses of such interfaces, and to create the corresponding simulated equipment and interfaces.

6. A system according to any one of claims 1 to 5, wherein said input interface and said concentrator include configuration switches (25, 38) capable of materially associating the input interface with a predetermined concentrator.

7. A system according to any one of claims 1 to 6, wherein said input interface includes an inner metering function, for example, of the electric power, and is so arranged as to transmit the information relating to said inner metering function, also through carrier currents.

8. A system according to any one of claims 1 to 6, wherein said input interface includes an inner metering function, for example, of the electric power, does not include a remote reporting bus output and is so arranged as to transmit the information relating to said inner metering function, also through carrier currents.

9. A system according to any one of claims 1 to 8, wherein at least one of said first and second coupling circuits includes a transmission amplifier (39) and a coupling transformer (42, 50) secondary circuit (43) connected in parallel on a power line, and a condenser (40, 51) connected in series with the transmission amplifier and the transformer primary circuit.

10. A system according to claim 9, wherein a resistance (47) has one of its terminal connected between the output of the transmission amplifier and the condenser and its other terminal connected to the ground, the receiving circuit (48) of the coupling circuit having its input at the point of common coupling of the output of the transmission amplifier, the condenser and said resistance.

11. A system according to any one of claims 9 and 10, wherein said coupling transformer (42, 50) has a primary/secondary transformation ratio greater than or equal to three, particularly of the order of four.

12. A system according to any one of claims 9 to 11, wherein said secondary circuit (63) of the coupling transformer (62) includes three outputs, each of such outputs being connected in parallel on a phase (52, 53, 54) of a three-phase power line, with respect to the point of common coupling connected to the neutral (45).

13. A system according to any one of claims 9 to 11, wherein said coupling circuit includes three coupling transformers (50), the secondary circuit of each coupling transformer being connected in parallel on a phase (52, 53, 54) of a three-phase power line, with respect to the point of common coupling connected to the neutral (45).

14. A system according to claim 13, wherein said coupling circuit includes a condenser (51) connected in series with the transmission amplifier and the primary circuit of each coupling transformer.

## Patentansprüche

1. System für die Fernablesung von Zählausrüstungen, wobei dieses System folgende Ausrüstungen umfaßt:
- Mindestens einen Fernübertragungsbus (6), an den mindestens eine abzulesende Ausrüstung (4, 5) angeschlossen ist, damit über den besagten Bus Informationen bezüglich der besagten Ausrüstung übermittelt werden;
- Eine Eingangsschnittstelle (7) zwischen dem besagten Fernübertragungsbus und einer Leitung mit elektrischer Energie (11), wobei die besagte Schnittstelle einen ersten Koppelschaltkreis (18) umfaßt, um die besagten Informationen durch Trägerströme auf der besagten Leitung für elektrische Energie zu übermitteln;
- Einen Konzentrator (14), der einen zweiten Koppelschaltkreis (26, 26') für seinen Anschluß an die besagte Leitung mit elektrischer Energie und mindestens eine Ausgangsschnittstelle (34, 37) für das Sammeln der besagten Informationen umfaßt;
Wobei der besagte Konzentrator für die Aufnahme und das Speichern der besagten Informationen in Form von simulierten Ausrüstungen (4') und Eingangsschnittstellen (7', 10') gestaltet ist, die den reellen Ausrüstungen und Schnittstellen des Systems entsprechen, wobei ein simulierter Fernübertragungsbus (61) die besagten simulierten Ausrüstungen und Eingangsschnittstellen mit der besagten Ausgangsschnittstelle verbindet.

2. System nach Anspruch 1, wobei die besagte Ausgangsschnittstelle eine Schnittstelle eines Fernübertragungsbusses ist.

3. System nach Anspruch 1, wobei die besagte Ausgangsschnittstelle eine Schnittstelle eines Telefonnetzes ist.

4. System nach Anspruch 1, wobei die besagte Ausgangsschnittstelle eine Schnittstelle einer LAN Ethernet Netzschnittstelle ist.

5. System nach einem beliebigen der vorstehenden Ansprüche 1 bis 4, wobei der Konzentrator dafür gestaltet ist, daß er bei seinem Einbau die Eingangsschnittstellen entdeckt, die auf der besagten Leitung für elektrische Energie vorhanden sind und die Ausrüstungen, die an die Fernübertragungsbusse dieser Schnittstellen angeschlossen sind, und dafür, daß er die entsprechenden simulierten Ausrüstungen und Schnittstellen anlegt.

6. System nach einem beliebigen der vorstehenden Ansprüche 1 bis 5, wobei die besagte Eingangsschnittstelle und der besagte Konzentrator Konfigurationsschalter (25, 38) umfassen, die geeignet sind, die Eingangsschnittstelle über ein Gerät materiell mit einem vorbestimmten Konzentrator zu verbinden.

7. System nach einem beliebigen der vorstehenden Ansprüche 1 bis 6, wobei die besagte Eingangsschnittstelle eine interne Zählfunktion, zum Beispiel für die elektrische Energie, umfaßt und so gestaltet ist, daß sie ebenfalls mit Trägerströmen die Informationen bezüglich der besagten internen Zählfunktion übermittelt.

8. System nach einem beliebigen der vorstehenden Ansprüche 1 bis 6, **dadurch** wobei die besagte Eingangsschnittstelle eine interne Zählfunktion, zum Beispiel für die elektrische Energie, umfaßt, keinen Ausgang für den Fernübertragungsbus umfaßt und so gestaltet ist, daß sie ebenfalls mit Trägerströmen die Informationen bezüglich der besagten internen Zählfunktion übermittelt.

9. System nach einem beliebigen der vorstehenden Ansprüche 1 bis 8, wobei mindestens einer, nämlich der erste oder der zweite Koppelschaltkreis einen Sendeverstärker (39) und einen sekundären Kreis (43) eines Koppeltransformators (42, 50) umfaßt, der parallel auf einer Leitung für elektrische Energie angeschlossen ist, und einen Kondensator (40, 51) in Serie mit dem Sendeverstärker und dem Primärschaltkreis des Transformators.

10. System nach Anspruch 9, wobei ein Widerstand (47) eine seiner Klemmen zwischen dem Ausgang des Sendeverstärkers und dem Kondensator angeschlossen hat, und seine andere Klemme an der Masse, wobei der Empfangskreis (48) des Koppelschaltkreises seinen Eingang am gemeinsamen Punkt am Ausgang des Sendeverstärkers, am Kondensator und am besagten Widerstand hat.

11. System nach einem beliebigen der vorstehenden Ansprüche 9 und 10, wobei der besagte Koppeltransformator (42, 50) ein primäres/sekundäres Transformationsverhältnis über oder gleich drei besitzt, insbesondere bei vier.

12. System nach einem beliebigen der vorstehenden Ansprüche 9 bis 11, wobei der besagte Sekundärkreis (63) des Koppeltransformators (62) drei Ausgänge hat, wobei jeder dieser Ausgänge parallel an einer Phase (52, 53, 54) einer dreiphasigen Leitung mit elektrischer Energie im Verhältnis zum gemeinsamen mit dem Nulleiter (45) verbundenen Anschlußpunkt angeschlossen ist.

13. System nach einem beliebigen der vorstehenden Ansprüche 9 bis 11, **dadurch gekennzeichnet, daß** der besagte Koppelschaltkreis drei Koppeltransformatoren (50) umfaßt, wobei der Sekundärkreis jedes Koppeltransformators parallel an einer Phase (52, 53, 54) einer dreiphasigen Leitung mit elektrischer Energie im Verhältnis zum gemeinsamen mit dem Nulleiter (45) verbundenen Anschlußpunkt angeschlossen ist.

14. System nach Anspruch 13, wobei der besagte Koppelschaltkreis einen Kondensator (51) in Serie mit dem Sendeverstärker und dem Primärkreis jedes der Koppeltransformatoren umfaßt.
